(19)

Europäisches
Patentamt
European
Patent Office
Office européen
des brevets

(11) **EP 2 264 580 A2**

(12) **EUROPEAN PATENT APPLICATION**

(43) Date of publication:
**22.12.2010 Bulletin 2010/51**

(51) Int Cl.:
***G06F 3/048*** *(2006.01)* ***G06F 3/038*** *(2006.01)*

(21) Application number: **10164849.1**

(22) Date of filing: **03.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **10.06.2009 KR 20090051456**
**28.05.2010 KR 20100050412**

(71) Applicant: **Samsung Electronics Co., Ltd.**
**Suwon-si,**
**Gyeonggi-do 442-742 (KR)**

(72) Inventors:
• **Choi, Eun-seok**
**Gyeonggi-do (KR)**

• **Soh, Byung-seok**
**Gyeonggi-do (KR)**
• **Choi, Sang-on**
**Gyeonggi-do (KR)**
• **Yoo, Ho-june**
**Seoul (KR)**
• **Lee, Gee-hyuk**
**Daejeon (KR)**

(74) Representative: **Clark, David James**
**Appleyard Lees**
**15 Clare Road**
**Halifax, Yorkshire HX1 2HY (GB)**

(54) **Method and apparatus for processing motion data**

(57)     An apparatus which adaptively adjusts a filtering coefficient according to motion data and a method thereof are provided. The apparatus sets a filtering coefficient according to motion data, and performs low pass filtering on the motion data according to the set filtering coefficient. Accordingly, a cutoff frequency may be adaptively changed according to moving velocity of a user and thus optimum motion data which are filtered irrespective of movement may be generated.

FIG. 4

EP 2 264 580 A2

## Description

Apparatuses and methods consistent with the present invention relate to a an apparatus and methods for processing motion data.

Due to the recent development of digital technology and sensor technology, devices which sense user's movement in three-dimensional (3D) space and control the operation of corresponding devices have been widely used. Such 3D input devices are used to sense movement such as panning or tilting or to control movement of a pointer in a graphical user interface (GUI) environment of corresponding devices such as a mouse.

A device for controlling movement of a GUI pointer through user's movement in space is referred to as a space pointing device. Such a space pointing device may be independently used without a supporting means in 3D space.

Accordingly, contrary to a mouse which is supported by a mouse pad or base, a space pointing device is affected by vibration of a user's hand. In order to minimize effect induced by the vibration of a user's hand, a low pass filter (LPF) is generally used.

The LPF processes motion data using Numerical Formula 1 as follows:

【 Numerical Formula 1 】

$$y(k) = \alpha_0 x(k) + (1 - \alpha_0) y(k-1)$$

wherein,

$\alpha_0 [0 \leq \alpha_0 \leq 1]$ represents a filtering coefficient as a fixed constant,
$x(k)$ represents current motion data,
$y(k)$ represents filtered current motion data, and
$y(k-1)$ represents filtered previous motion data.

The cutoff frequency of LPF is set to be low in order to reduce effect induced by vibration of a user's hand using the LPF. To achieve it, the filtering coefficient $\alpha_0$ which serves as a constant should be set to be a small value.

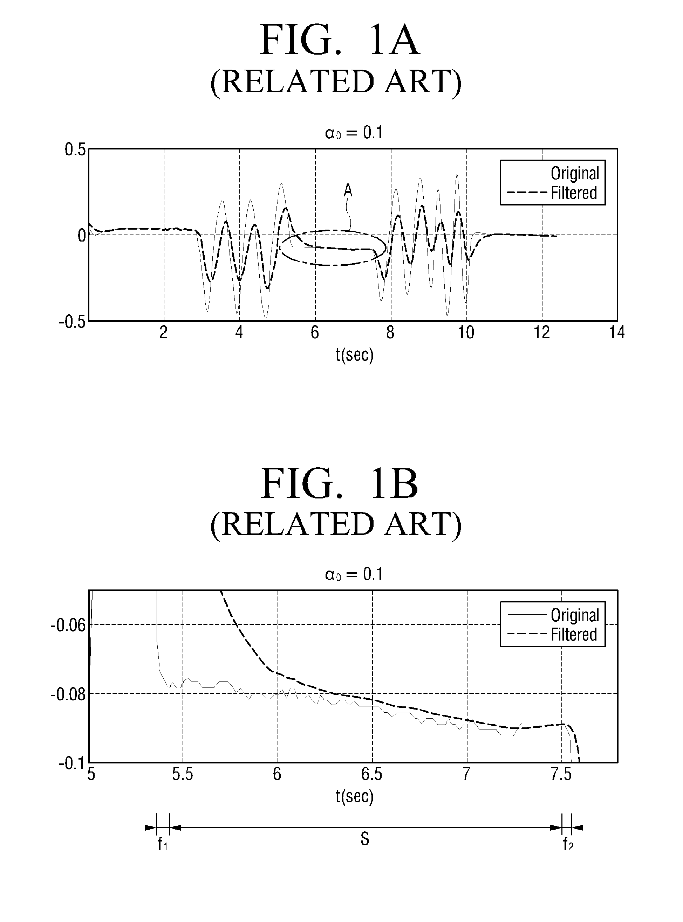

However, if the cutoff frequency is set to be low, there may be a problem that time delay may occur during fast movement. FIGS. 1A and 1B illustrate such a problem.

Referring to FIG. 1A, when the filtering coefficient $\alpha_0$ of Numerical Formula 1 is set to comparatively small constant, in this example 0.1, the original motion data input to the LPF are indicated as a solid line, and filtered motion data output from the LPF are indicated as a dotted line.

FIG. 1B is an enlarged view of Section A illustrated in FIG. 1A. Referring to filtered data (dotted line) illustrated in FIG. 1B, the effect induced by vibration of a user's hand is reduced within section S of slow movement, but time delay appears within sections f1 and f2 of fast movement.

The cutoff frequency of LPF is set to be high in order to minimize time delay, and the filtering coefficient $\alpha_0$ of Numerical Formula 1 should be set to be large in order to achieve it.

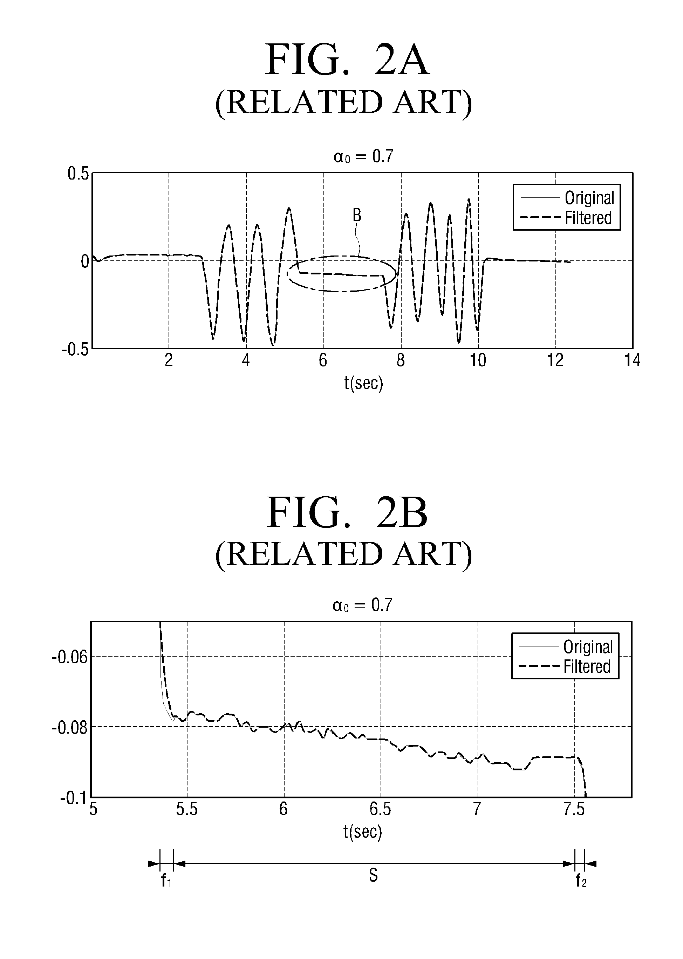

However, if the cutoff coefficient is high, there may be a problem that noise may occur due to vibration of a user's hand. FIGS. 2A and 2B illustrate such a problem.

Referring to FIG. 2A, when the filtering coefficient $\alpha_0$ of Numerical Formula 1 is set to comparatively large constant, in this example 0.7, the original motion data input to LPF are indicated as a solid line, and filtered motion data output from LPF are indicated as a dotted line.

FIG. 2B is an enlarged view of Section B illustrated in FIG. 2A. Referring to filtered data (dotted line) illustrated in FIG. 2B, the time delay is reduced within sections f1 and f2 of fast movement, but the noise induced by vibration of a user's hand still appears within section S of slow movement.

Exemplary embodiments of the present invention aim to address at least the above problems and/or disadvantages and other disadvantages not described above. Also, the present invention is not required to overcome the disadvantages described above, and an exemplary embodiment of the present invention may not overcome any of the problems described above.

An aspect of the present invention provides a method for setting a filtering coefficient based on motion data and performing low pass filtering (LPF) on the motion data and an apparatus using the same so that both time excessive delay induced by fast movement and vibration of a user's hand induced by slow movement may be improved.

According to an exemplary aspect of the present invention, there is provided an electronic apparatus, including a sensor which senses movement; a calculation unit which calculates motion data according to an output of the sensor; a setting unit which sets a filtering coefficient according to the motion data calculated by the calculation unit; a low pass filter (LPF) which performs low pass filtering on the motion data calculated by the calculation unit according to the filtering coefficient set by the setting unit; and a processor which processes the motion data filtered by the LPF.

The setting unit may calculate moving velocity according to the motion data calculated by the calculation unit, and set the filtering coefficient to adjust a cutoff frequency of the LPF according to the moving velocity.

If the moving velocity increases, the setting unit may set the filtering coefficient to increase the cutoff frequency of the LPF.

If the moving velocity decreases, the setting unit may set the filtering coefficient to decrease the cutoff frequency of the LPF.

The motion data calculated by the calculation unit may include at least one of position data and velocity data which is changed according to the movement sensed by the sensor.

If the motion data calculated by the calculation unit is the position data, the setting unit may calculate moving velocity using the position data within a time interval including at least one of a current time and previous times.

If the motion data calculated by the calculation unit is the velocity data, the setting unit may calculate the moving velocity using the velocity data within a time interval including at least one of a current time and previous times.

The movement may include at least one of 1) a movement of the electronic apparatus caused by a user, 2) a movement of the electronic apparatus caused by external force, and 3) a movement of the electronic apparatus caused by an internal force.

The processor may further perform one of 1) an operation to decide a location of a pointer to be displayed on a display according to the motion data filtered by the LPF, 2) an operation to transfer the motion data filtered by the LPF to an external device, and 3) an operation to control other elements according to the motion data filtered by the LPF.

According to another exemplary aspect of the present invention, there is provided a method for processing motion data, including sensing movement; calculating motion data according to the sensed movement; setting a filtering coefficient according to the calculated motion data; performing low pass filtering on the calculated motion data according to the set filtering coefficient; and processing the filtered motion data.

The operation of setting may include calculating moving velocity according to the calculated motion data; and setting the filtering coefficient to adjust a cutoff frequency according to the moving velocity.

If the moving velocity increases, the operation of setting may set the filtering coefficient to increase the cutoff frequency.

If the moving velocity decreases, the operation of setting may set the filtering coefficient to decrease the cutoff frequency.

The movement may comprise at least one of 1) movement of the electronic device caused by a user, 2) movement of the electronic device caused by an external force, and 3) movement of the electronic device caused by an internal force.

The operation of processing may perform one of 1) operation to decide location of a pointer to be displayed on a display according to the filtered motion data, 2) operation to transfer the filtered motion data to an external device, and 3) operation to control other element according to the filtered motion data, and process the filtered motion data.

According to another exemplary aspect of the present invention, there is provided a filtering apparatus, including a setting unit which sets a filtering coefficient according to motion data; and a low pass filter (LPF) which performs low pass filtering on the motion data according to the filtering coefficient set by the setting unit.

According to another exemplary aspect of the present invention, there is provided a computer-readable recording medium, recording thereon a program for: setting a filtering coefficient according to motion data; and performing low pass filtering on the motion data according to the set filtering coefficient.

According to another exemplary aspect of the present invention, there is provided a display system including a remote control and a display device, wherein the remote control has a sensor which senses movement; a calculation unit which calculates motion data according to an output of the sensor; a setting unit which sets a filtering coefficient according to the motion data calculated by the calculation unit; a low pass filter (LPF) which performs low pass filtering on the motion data calculated by the calculation unit according to the filtering coefficient set by the setting unit; and a transmitter which transmits the filtered motion data; wherein the display device has a receiver which receives the filtered motion data transmitted by the remote control; a processor which processes the motion data received by the receiver; and a display which displays images according to the processed motion data.

According to another exemplary aspect of the present invention, there is provided a display device having: a receiver which receives motion data which has been low pass filtered according to a filtering coefficient based on a sensed motion; a processor which processes the motion data received by the receiver; and a display which displays images according to the processed motion data.

According to another exemplary aspect of the present invention, there is provided an electronic device, including a sensor which senses movement; a calculator which calculates motion data based on an output from the sensor; and a motion processor which adjusts a degree of removing movements unintended by a user according to a moving velocity calculated based on the motion data.

The motion processor may adjust the degree of removing movements unintended by a user so that the faster the moving velocity becomes, the lower the degree of removing movements unintended by a user becomes.

The motion processor may include a setting unit which sets a filtering coefficient to adjust the degree of removing movements unintended by a user according to the moving velocity; a low pass filter (LPF) which performs low pass filtering on the motion data calculated by the calculator according to the filtering coefficient set by the setting unit; and a processor which processes the motion data filtered by the LPF.

The setting unit may set the filtering coefficient to be high if the moving velocity is high so that the faster the moving velocity becomes, the lower the degree of removing movements unintended by a user becomes.

According to another exemplary aspect of the present invention, there is provided a motion data processing method, including sensing movement; calculating motion data based on an output from a sensor; and motion-processing to adjust a degree of removing movements unintended by a user according to a moving velocity calculated based on the motion data.

The motion-processing may adjust the degree of removing movements unintended by a user so that the faster the moving velocity becomes, the lower the degree of removing movements unintended by a user becomes.

The motion-processing may include setting a filtering coefficient to adjust the degree of removing movements unintended by a user according to the moving velocity; performing low pass filtering on the calculated motion data according to the set filtering coefficient; and processing the filtered motion data.

The setting may set the filtering coefficient to be high if the moving velocity is high so that the faster the moving velocity becomes, the lower the degree of removing movements unintended by a user becomes.

According to another exemplary aspect of the present invention, there is provided an electronic device, including a sensor which senses movement; a calculator which calculates motion data based on an output from the sensor; and a motion processor which adjusts a sensitivity in sensing movements according to a moving velocity calculated based on the motion data.

The motion processor may adjust the sensitivity in sensing movements so that the faster the moving velocity becomes, the higher the sensitivity in sensing movements becomes.

The motion processor may include a setting unit which sets a filtering coefficient to adjust the sensitivity in sensing movements according to the moving velocity; a low pass filter (LPF) which performs low pass filtering on the motion data calculated by the calculator according to the filtering coefficient set by the setting unit; and a processor which processes the motion data filtered by the LPF.

The setting unit may set the filtering coefficient to be high if the moving velocity is high so that the faster the moving velocity becomes, the higher the sensitivity in sensing movements becomes.

According to another exemplary aspect of the present invention, there is provided a display system, including a remote controller which senses movements and outputs motion data of the sensed movements; and a display apparatus which adjusts a degree of removing movements unintended by a user according to a moving velocity calculated based on the motion data output from the remote controller.

The display apparatus may adjust the degree of removing movements unintended by a user so that the faster the moving velocity becomes, the lower the degree of removing movements unintended by a user becomes.

According to another exemplary aspect of the present invention, there is provided a display system, including a remote controller which senses movements and outputs motion data of the sensed movements; and a display apparatus which adjusts a sensitivity in sensing movements according to a moving velocity calculated based on the motion data output from the remote controller.

The display apparatus may adjust the sensitivity in sensing movements so that the faster the moving velocity becomes, the higher the sensitivity in sensing movements becomes.

According to the present invention there is provided an apparatus and method as set forth in the appended claims. Other features of the invention will be apparent from the dependent claims, and the description which follows.

The above and/or other aspects of the present invention will be more apparent by describing certain exemplary embodiments of the present invention with reference to the accompanying drawings, in which:

FIGS. 1A and 1B are views illustrating a problem in which if a cutoff coefficient of a LPF is low, time delay occurs for fast movement;

FIGS. 2A and 2B are views illustrating a problem in which if a cutoff coefficient of a LPF is high, noise induced by vibration of a user's hand appears;

FIG. 3 is a block diagram illustrating a space pointing device according to an exemplary embodiment of the present invention;

FIG. 4 is a flowchart provided to explain a filtering method according to an exemplary embodiment of the present invention;

FIGS. 5A and 5B are views illustrating simulation results of the space pointing device illustrated in FIG. 3; and

FIG. 6 is a view illustrating a filtering coefficient adaptively changed by the simulation according to an exemplary embodiment of the present invention;

FIGS. 7 to 9 are views provided to explain a broadcast receiving system which is implemented using a space pointing device; and

FIG. 10 is a block diagram illustrating a DTV and a remote controller provided in a broadcast receiving system.

Certain exemplary embodiments of the present invention will now be described in greater detail with reference to the accompanying drawings.

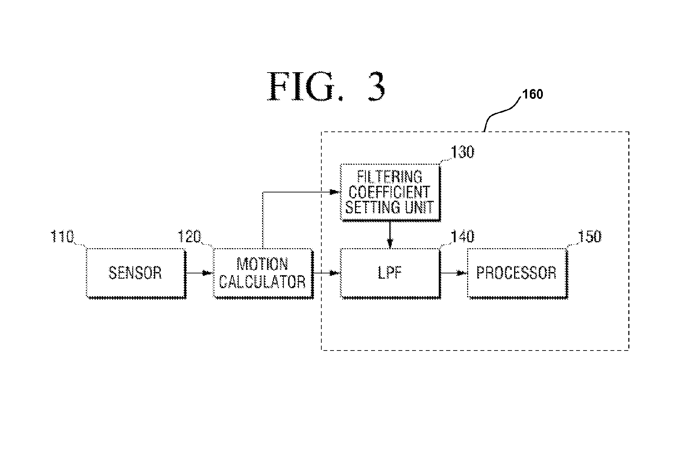

FIG. 3 is a block diagram illustrating a space pointing device according to an exemplary embodiment of the present invention. The space pointing device represents a pointing device of which location should be moved by a user in space in order for the user to move the location of a pointer on a display of an apparatus.

Specifically, 1) if a user moves his or her hand holding the space pointing device upward, the pointer shown on the display is also moved upward, 2) if a user moves his or her hand holding the space pointing device rightward, the pointer shown on the display is also moved rightward.

## 1. Design of space pointing device

Referring to FIG. 3, the space pointing device according to an exemplary embodiment of the present invention comprises a sensor 110, a motion calculator 120, a filtering coefficient setting unit 130, a low pass filter (LPF) 140, and a processor 150. A motion processor 160 comprises the filtering coefficient setting unit 130, the LPF 140, and the processor 150.

The sensor 110 senses movement of the space pointing device corresponding to user's movement. In more detail, the sensor 110 senses 1) movement on the first axis if the movement of the space pointing device is in one dimension, 2) movement on the first and second axes if the movement of the space pointing device is in two dimensions, and 3) movement on the first, second, and third axes if the movement of the space pointing device is in three dimensions.

The motion calculator 120 generates data based on the output from the sensor 110. That is, the motion calculator 120 calculates motion data based on the movement sensed by the sensor 110. Specifically, 1) if the movement of the space pointing device is in one dimension, the motion calculator 120 calculates motion data on the first axis based on the movement on the first axis sensed by the sensor 110, 2) if the movement of the space pointing device is in two dimensions, 2-1) the motion calculator 120 calculates motion data on the first axis based on the movement on the first axis sensed by the sensor 110, and 2-2) the motion calculator 120 calculates motion data on the second axis based on the movement on the second axis sensed by the sensor 110, and 3) if the movement of the space pointing device is in three dimensions, 3-1) the motion calculator 120 calculates motion data on the first axis based on the movement on the first axis sensed by the sensor 110, 3-2) the motion calculator 120 calculates motion data on the second axis based on the movement on the second axis sensed by the sensor 110, and 3-3) the motion calculator 120 calculates motion data on the third axis based on the movement on the third axis sensed by the sensor 110.

The motion processor 160 removes noises from motion data by performing filtering on the motion data. Herein, the noise refers movement unintended by a user. The representative noise induced by a user's movement may be vibration by a user's hand. The noise induced by a user's movement has a higher frequency than that of movement intended by a user. Therefore, the motion processor 160 may remove the noise having a high frequency using low pass filtering.

The motion processor 160 may adjust the degree of removing noise from the motion data by setting a filtering coefficient differently according to a moving velocity calculated based on the motion data. Accordingly, the motion processor 160 may adjust the degree of removing the movements unintended by a user according to the moving velocity. This may mean that the motion processor 160 adjusts the sensitivity in sensing movements according to the moving velocity. This is because the higher the degree of removing noise is, the lower the sensitivity in sensing movements is.

Specifically, the motion processor 160 adjusts the degree of removing noise so that the faster the moving velocity becomes, the lower the degree of removing noise becomes. That is, if the moving velocity increases, the motion processor 160 may adjust the degree of removing movements unintended by a user to be low and the sensitivity in sensing movements to be high. The above operation of processing motion data of the motion processor 160 is performed by the filtering coefficient setting unit 130, the LPF 140, and the processor 150, which will be explained below in detail.

The LPF 140 performs low pass filtering on motion data calculated by the motion calculator 120. The low pass filtering performed by the LPF 140 is represented by Numerical Formula 2 as follows:

【 Numerical Formula 2 】

$$y(k) = \alpha(k)x(k) + (1 - \alpha(k))y(k - 1)$$

wherein,

$\alpha(k)(0 \leq \alpha(k) \leq 1]$ represents a filtering coefficient set by the filtering coefficient setting unit 130 which will be explained later,

x(k) represents current motion data calculated by the motion calculator 120,

$y(k)$ represents current motion data filtered by the LPF 140, and

$y(k$ - 1) represents previous motion data filtered by the LPF 140.

The LPF 140 performs low pass filtering in a different manner according to a type of movement. Specifically, the LPF 140 performs 1) low pass filtering on motion data on the first axis calculated by the motion calculator 120 if the movement of the space pointing device is in one dimension, 2) low pass filtering on motion data on the first and second axes calculated by the motion calculator 120 if the movement of the space pointing device is in two dimensions, and 3) low pass filtering on motion data on the first, second, and third axes calculated by the motion calculator 120 if the movement of the space pointing device is in three dimensions.

The processor 150 transfers motion data [$y(k)$] filtered by the LPF 140 to the main body (not shown) of the apparatus according to an exemplary embodiment of the present invention. The filtered motion data [$y(k)$] transferred from the processor 150 to the main body differ according to a type of movement. Specifically, the motion data transferred from the processor 150 to the main body represent 1) filtered motion data of the first axis if the movement of the space pointing device is in one dimension, 2) filtered motion data of the first and second axes if the movement of the space pointing device is in two dimensions, and 3) filtered motion data of the first, second and third axes if the movement of the space pointing device is in three dimensions.

Accordingly, the main body estimates location of the pointer based on the filtered motion data [$y(k)$] transferred from the processor 150, and moves the pointer to the estimated location.

The filtering coefficient setting unit 130 sets the filtering coefficient [$\alpha(k)$] of the LPF 140. That is, the LPF 140 filters the motion data [$x(k)$] according to the filtering coefficient [$\alpha(k)$] set by the filtering coefficient setting unit 130.

The filtering coefficient setting unit 130 may set a filtering coefficient [$\alpha(k)$]to adjust the degree of removing movements unintended by a user (that is, the sensitivity in sensing movements) according to a moving velocity. Specifically, if the moving velocity increases, the filtering coefficient setting unit 130 sets a filtering coefficient to be high so that the faster the moving velocity becomes, the lower the degree of removing movements unintended by a user becomes (that is, the higher the sensitivity in sensing movements becomes).

The filtering coefficient setting unit 130 uses the motion data [$x(k)$] calculated by the motion calculator 120 in order to set the filtering coefficient [$\alpha(k)$]. Hereinbelow, the method for the filtering coefficient setting unit 130 to set the filtering coefficient [$\alpha(k)$] will be explained in detail.

**2. Setting of filtering coefficient** [$\alpha(k)$]

The filtering coefficient [$\alpha(k)$] set by the filtering coefficient setting unit 130 is represented by Numerical Formula 3 as follows:

【 Numerical Formula 3】

$$\alpha(k) = \alpha_0 + K\eta(x(k))$$

wherein,

$\alpha_0$ represents an initial filtering coefficient,
K represents a proportional constant,
$\eta(x(k))$ represents a moving velocity calculated based on the motion data [x(k)] which is calculated by the motion calculator 120.

The initial filtering coefficient ($\alpha_0$) and the proportional constant (K) may be set according to a specification of the space pointing device.

**1) Calculation of moving velocity** [$\eta(x(k))$]

Referring to Numerical Formula 3, the filtering coefficient setting unit 130 calculates the moving velocity [$\eta(x(k))$] based on the motion data [$x(k)$] calculated by the motion calculator 120 in order to set the filtering coefficient [$\alpha(k)$].

The motion data [$x(k)$] calculated by the motion calculation unit 120 may be represented as position data [$p(k)$] or velocity data [$v(k)$]. Hereinbelow, the method for calculating the moving velocity [$\eta(x(k))$] will be explained according to whether the motion data [$x(k)$] are represented as position data [$p(k)$] or velocity data [$v(k)$].

**1-1) Calculation of moving velocity [$\eta(x(k))$]when the motion data [$x(k)$] is position data [$p(k)$]**

If the motion data [$x(k)$] is position data [$p(k)$], the filtering coefficient setting unit 130 calculates the moving velocity [$\eta(x(k))$] using the position data [$p(k)$] in a time interval including at least one of a current time and previous times. Herein, the calculated moving velocity [$\eta(x(k))$] is represented by Numerical Formula 4 as described below:

【 Numerical Formula 4】

$$\eta(x(k)) = \eta(p(k)) = \sigma(p(k:k-w))$$

wherein,

$\sigma(p(k{:}k - w))$ represents the standard deviation of latest $w+1$ number of position data [$p(k)$]

The standard deviation may alternatively be substituted with the variance.

**1-2) Calculation of moving velocity [$K\eta(x(k))$] when the motion data[$x(k)$] is velocity data [$v(k)$]**

If the motion data [$x(k)$] is velocity data [$v(k)$], the filtering coefficient setting unit 130 calculates the moving velocity [$\eta(x(k))$] using the velocity data [$v(k)$] in a time interval including at least one of a current time and previous times. Herein, the calculated moving velocity [$\eta(x(k))$] is represented by Numerical Formula 5 as described below:

【 Numerical Formula 5】

$$\eta(x(k)) = \eta(v(k)) = Ave\{|v|(k:k-w)\}$$

wherein, $Ave\{|v|(k{:}\ k - w)\}$ represents the average of absolute values of the latest w + 1 number of velocity data [$v(k)$].

The average of absolute values may alternatively be substituted with the average.

## 2) Characteristic of filtering coefficient [$\alpha(k)$]

Referring to Numerical Formula 3, the filtering coefficient [$\alpha(k)$] is proportional to the moving velocity [$\eta(x(k))$]. Accordingly, if the moving velocity [$\eta(x(k))$] increases, the filtering coefficient [$\alpha(k)$] increases, and if the moving velocity [$\eta(x(k))$] decreases, the filtering coefficient [$\alpha(k)$] also decreases.

The cutoff frequency ($f_c$) of the LPF 140 is proportional to the filtering coefficient [$\alpha(k)$]. Accordingly, if the filtering coefficient [$\alpha(k)$] increases, the cutoff frequency ($f_c$) of the LPF 140 increases, and if the filtering coefficient [$\alpha(k)$] decreases, the cutoff frequency ($f_c$) of the LPF 140 also decreases.

Subsequently, the following relationship is obtained.

i ) increase of moving velocity [$\eta(x(k))$] $\rightarrow$ increase of filtering coefficient [$\alpha(k)$] $\rightarrow$ increase of cutoff frequency ($f_c$)

ii ) decrease of moving velocity [$\eta(x(k))$] $\rightarrow$ decrease of filtering coefficient [$\alpha(k)$] $\rightarrow$ decrease of cutoff frequency ($f_c$)

In accordance with the above relationship, the filtering coefficient setting unit 130 may set the filtering coefficient [$\alpha(k)$] of the LPF 140 so that i) if the moving velocity [$\eta(x(k))$] increases, the cutoff frequency ($f_c$) of the LPF 140 increases and ii ) if the moving velocity [$\eta(x(k))$] decreases, the cutoff frequency ($f_c$) decreases.

That is, the filtering coefficient setting unit 130 sets the filtering coefficient [$\alpha(k)$] to adjust the cutoff frequency ($f_c$) of the LPF 140 based on the moving velocity [$\eta(x(k))$].

As a result, if the filtering coefficient [$\alpha(k)$] is increased, the degree of removing noises is decreased (that is, the degree of removing movements unintended by a user is decreased and the sensitivity in sensing movements is increased), and if the filtering coefficient [$\alpha(k)$] is decreased, the degree of removing noises is increased (that is, the degree of removing movements unintended by a user is increased and the sensitivity in sensing movements is decreased.

That is, this may be summed up as follows:

i) increasing a moving velocity [$\eta(x(k))$] $\rightarrow$ increasing a filtering coefficient [$\alpha(k)$] $\rightarrow$ increasing a cutoff frequency ($f_c$) $\rightarrow$ decreasing the degree of removing noises (that is, decreasing the degree of removing movements unintended by a user, and increasing the sensitivity in sensing movements)

ii) decreasing _a moving velocity [$\eta(x(k))$] $\rightarrow$ decreasing a filtering coefficient [$\alpha(k)$] $\rightarrow$ decreasing a cutoff frequency ($f_c$) $\rightarrow\alpha$ increasing the degree of removing noises (that is, increasing the degree of removing movements unintended by a user, and decreasing the sensitivity in sensing movements)

## 3) Set of filtering coefficient [$\alpha(k)$] according to type of movement

The filtering coefficient setting unit 130 sets a filtering coefficient in a different manner according to a type of movement.

Specifically, 1) if the movement of the space pointing device is in one dimension, the filtering coefficient setting unit 130 sets a filtering coefficient for the motion data on the first axis based on the first axis motion data calculated by the movement calculator 120, 2) if the movement of the space pointing device is in two dimensions, 2-1) the filtering coefficient setting unit 130 sets a filtering coefficient for the motion data on the first axis based on the first axis motion data calculated by the motion calculator 120, and 2-2) the filtering coefficient setting unit 130 sets a filtering coefficient for the motion data on the second axis based on the second axis motion data calculated by the motion calculator 120, and 3) if the movement of the space pointing device is in three dimensions, 3-1) the filtering coefficient setting unit 130 sets a filtering coefficient for the motion data on the first axis based on the first axis motion data calculated by the motion calculator 120, 3-2) the filtering coefficient setting unit 130 sets a filtering coefficient for the motion data on the second axis based on the second axis motion data calculated by the motion calculator 120, and 3-3) the filtering coefficient setting unit 130 sets a filtering coefficient for the motion data on the third axis based on the third axis motion data calculated by the motion calculator 120.

## 3. Operation of space pointing device

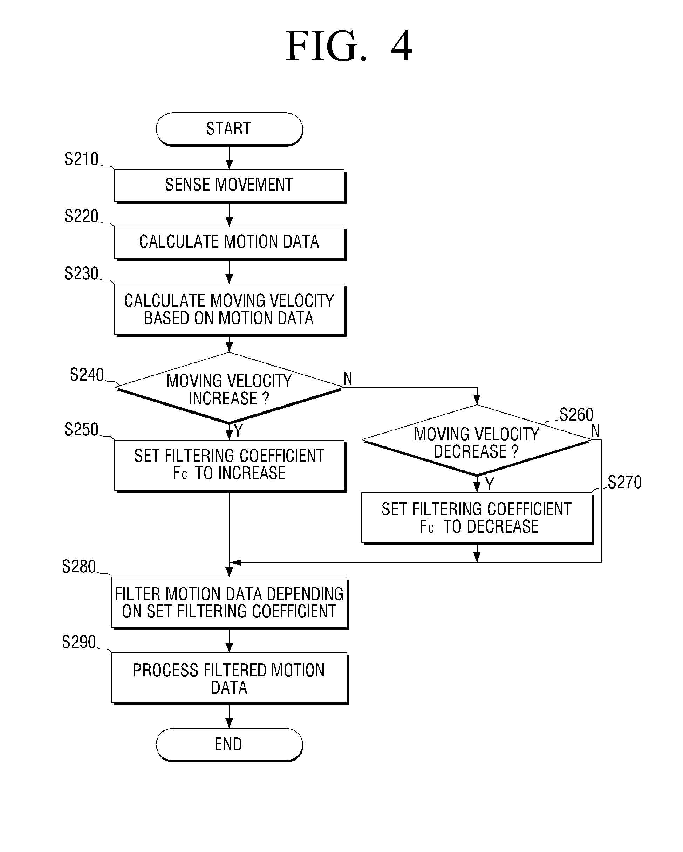

Hereinbelow, the operating algorithm of the space pointing device illustrated in FIG. 3 will be explained in detail with reference to FIG. 4. FIG. 4 is a flowchart provided to explain a filtering method according to an exemplary embodiment of the present invention.

Referring to FIG. 4, the sensor 110 senses movement of the space pointing device corresponding to user's movement (S210).

The motion calculator 120 calculates motion data based on the movement sensed by the sensor 110 (S220).

The filtering coefficient setting unit 130 calculates moving velocity based on the motion data calculated in operation S220 (S230). The moving velocity in operation S230 may be calculated using Numerical Formulas 4 and 5 described above.

If it is determined that the moving velocity increases (S240-Y), the filtering coefficient setting unit 130 sets the filtering coefficient of the LPF 140 to increase the cutoff frequency ($f_c$) of the LPF 140 (S250).

On the other hand, if it is determined that the moving velocity decreases (S260-Y), the filtering coefficient setting unit 130 sets the filtering coefficient of the LPF 140 to decrease the cutoff frequency ($f_c$) of the LPF 140 (S270).

The filtering coefficient in operations S250 and S270 may be set using Numerical Formula 3 described above.

The LPF 140 performs low pass filtering on the motion data calculated in operation S220 depending on the filtering coefficient set in operation S250 or S270 (S280). The low pass filtering in operation S280 may be performed using Numerical Formula 2 described above.

The processor 150 transfers the motion data filtered in operation S280 to the main body (S290).

If it is determined that the moving velocity does not change, that is, it does neither increase nor decrease (S240-N and S260-N), the filtering coefficient setting unit 130 retains the filtering coefficient of the LPF 140 without changing it.

### 4. Filtering simulation of space pointing device according to exemplary embodiment

Hereinbelow, the simulation result of the space pointing device illustrated in FIG. 3 will be explained.

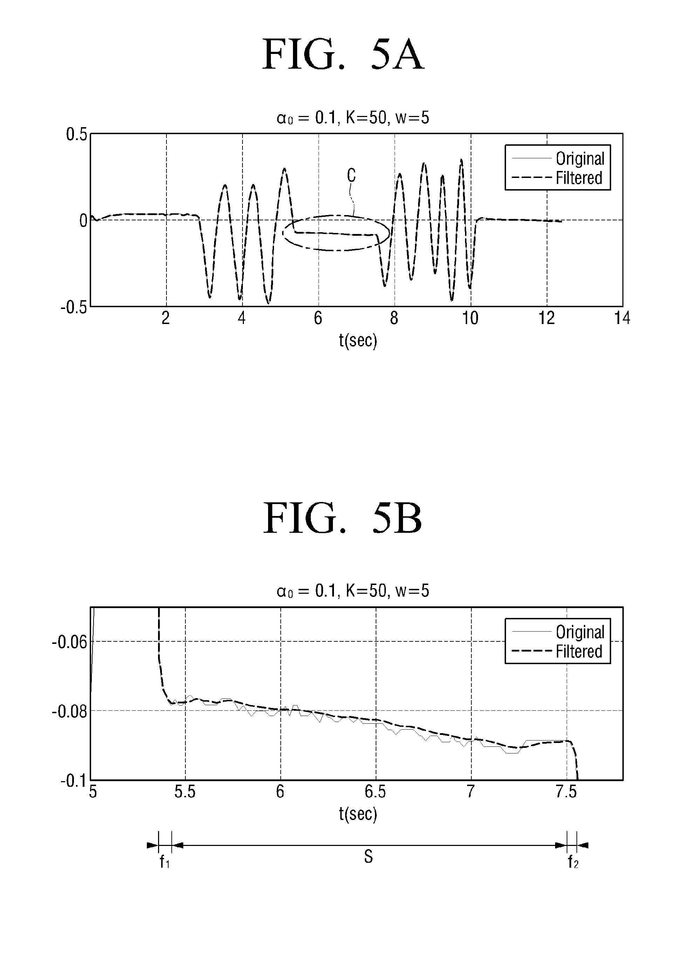

Referring to FIG. 5A, when the initial filtering coefficient ($\alpha_0$) is set to 0.1, the proportional constant K is set to 50, and w is set to 5, both the original motion data (solid line) input to the LPF 140 and the filtered motion data (dotted line) output from the LPF 140 are shown together.

FIG. 5B is an enlarged view of Section C illustrated in FIG. 5A. Referring to the filtered motion data (dotted line) illustrated in FIG. 5B, the noise induced by vibration of a user's hand is reduced within section S in which slow movement occurs, and time delay does not appear within sections f1 and f2 in which fast movement occurs.

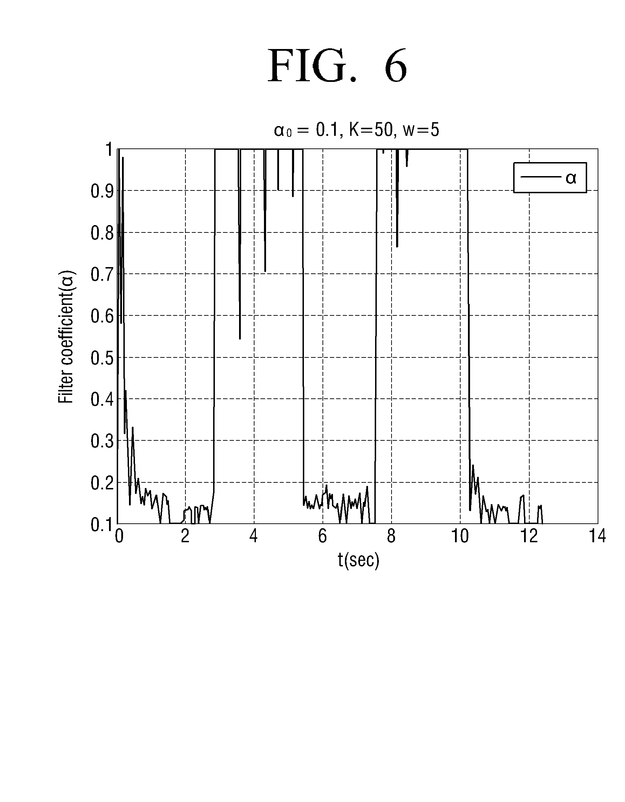

The above result is obtained from the adaptively changing filtering coefficient [$\alpha(k)$] as illustrated in FIG. 6. FIG. 6 is a graph illustrating the change of the filtering coefficient [$\alpha(k)$] when the original motion data (solid lime) illustrated in FIG. 5A are input to the LPF 140. Referring to FIG. 6, the filtering coefficient [$\alpha(k)$] is increased close to 1 within the section of fast movement, and the filtering coefficient is decreased close to 0.1 within the section of slow movement.

### 5. Alternative Examples

While the space pointing device is used in this exemplary embodiment of the present invention, the space pointing device is merely an exemplary electronic device to sense user's movement. The ideas of the present invention may be applied to other electronic devices, e.g., a remote control, a display device, a display system, etc.

If the electronic device is moved by the external force or the internal force other than by a user, the exemplary embodiment of the present invention may also be applied.

The processor 150 according to an exemplary embodiment of the present invention transfers the motion data filtered by the LPF 140 to the external apparatus such as the main body, but the processor 150 may perform other operations.

For example, the processor 150 may decide the location of the pointer displayed on the display based on the motion data filtered by the LPF 140 or control other elements based on the motion data filtered by the LPF 140.

While a first order LPF 140 is used in this exemplary embodiment, any other order LPF may also be used.

There is no limitation to the type of the sensor 110. The sensor 110 may be an inertial sensor such as an acceleration sensor or a gyro sensor, an optical sensor, an infrared sensor, or an image sensor.

The filtering apparatus including the filtering coefficient setting unit 130 and the LPF 140 may be used to implement an exemplary embodiment of the present invention. The method provided in this exemplary embodiment of the present invention may be implemented as a computer program.

### 6. Broadcast Receiving System Applicable to Exemplary Embodiment

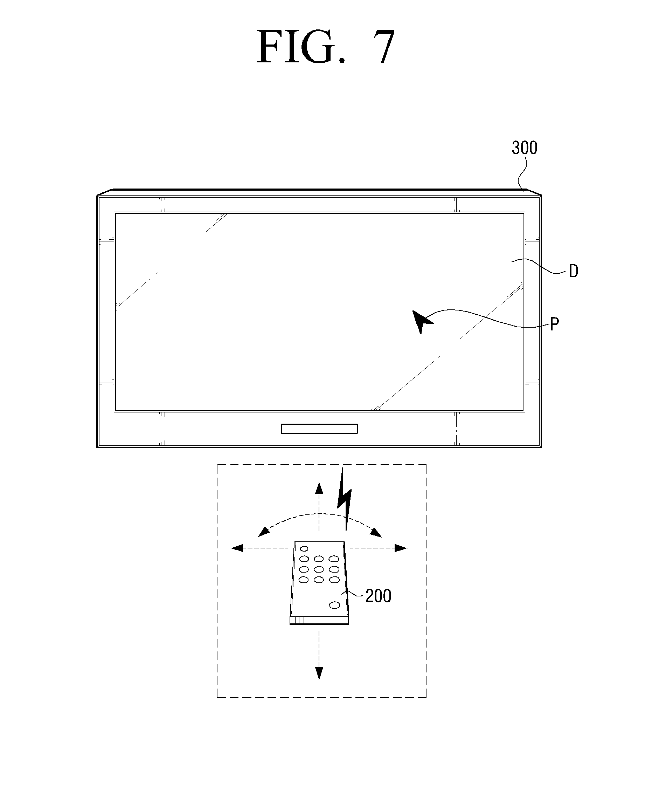

A technical aspect of the space pointing device provided in the above exemplary embodiment may be applicable to a remote controller. FIG. 7 shows a broadcast receiving system which comprises a remote controller 200 implemented as a space pointing device and a DTV 300 implemented as a broadcast receiving apparatus.

The DTV 300 provides a user with a broadcast received over wire or wirelessly through a display D. In addition, the DTV 300 may provide a user with an external input which is received from an external device connected to the DTV 300 over wire or wirelessly through the display D, and also provide a user with files stored in an internal storage medium or an external storage unit connected to the DTV 300 by reproducing the files.

The remote controller 200 transfers a user's manipulation to the DTV 300, and then the DTV 300 operates to respond to the user's manipulation, accordingly. In addition, the remote controller 200 operates as a pointing device, which will be explained below in detail.

As indicated by dotted arrows in FIG. 7, the front of the remote controller 200 may be moved by a user in an upwards or downwards direction, or to the left or right, or in a direction combining two of these directions, such as an upper-leftwards direction. That is, the front of the remote control 200 may be moved in any direction.

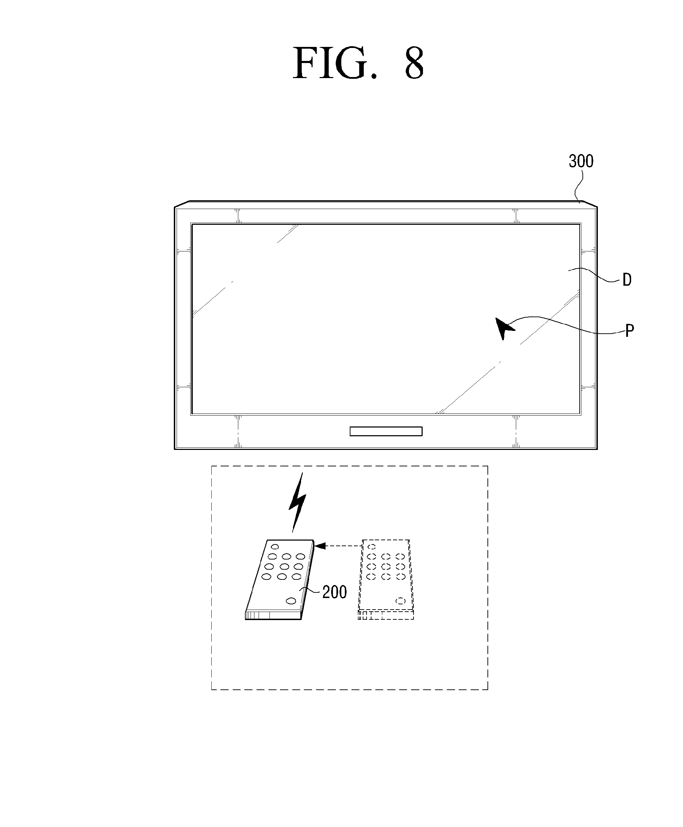

For example, the front of the remote control 200 may be moved while drawing a locus on a virtual plane which is parallel with a screen of the display D. FIG. 8 shows the case in which the front of the remote controller 200 is moved to the left direction while drawing a locus on a virtual plane which is parallel with the screen of the display D.

The virtual plane may not be completely parallel with the screen of the display D, and may not be a complete plane. That is, it is practically impossible for the movement of the front of the remote controller 200 by the user to be on a complete plane and completely parallel with the screen of the display D.

Accordingly, the exemplary embodiment is applicable to the case in which the front of the remote controller 200 moves on an incomplete plane and not completely parallel with the screen of the display D.

A user may move the front of the remote controller 200 by turning only the user's wrist while the user's arm holding the remote controller 200 is fixed.

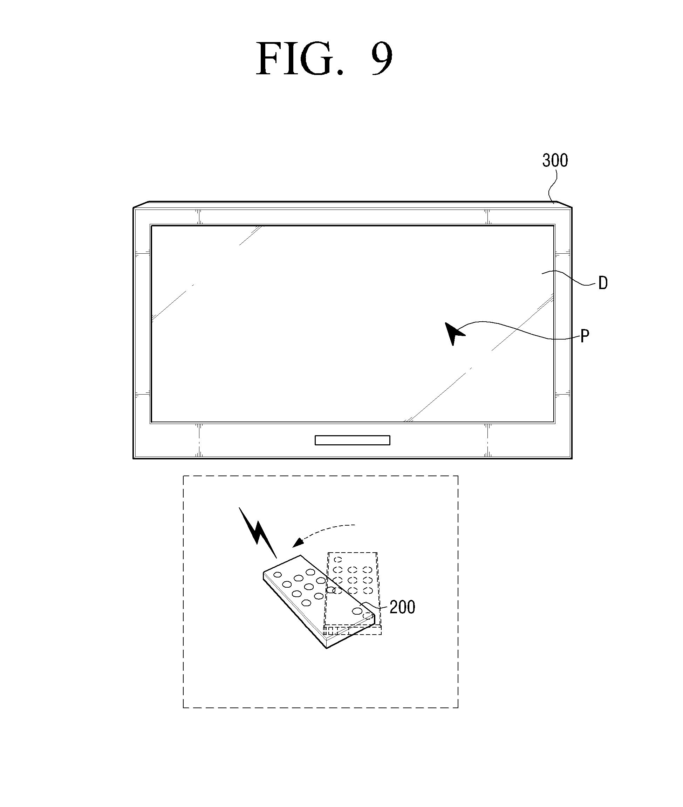

That is, if only a user's wrist moves in an upwards or downwards direction, or to the left or right, or in a direction combining these, such as an upper leftward direction, the front of the remote controller 200 may be moved upwards, downwards, or to the left or right, or in a direction combining these, such as an upper leftwards direction while drawing a curved locus on a virtual hemisphere surface. FIG. 9 shows the case in which the front of the remote controller 200 is moved to the left by a user while drawing a curved locus on a virtual hemisphere surface.

The virtual hemisphere surface, on which the front of the remote controller 200 is moved by rotation of the user's wrist, may be a mathematically incomplete hemisphere surface. That is, it is practically impossible for the front of the remote controller 200 to be moved by rotating the user's wrist while drawing a locus on a mathematically complete hemisphere surface.

Accordingly, the exemplary embodiment may be applicable to the case in which the front of the remote controller 200 moves not on a mathematically complete hemisphere, but on an incomplete hemisphere surface, while drawing a curved locus.

That is, a pointer P displayed on the display D may be moved by the user spatially moving the remote controller 200. The spatial movement of the front of the remote controller 200 is distinguished from the movement of a mouse for a personal computer (PC), which is moved over a surface.

When the front of the remote controller 200 is moved in a space, the pointer P displayed on the display D moves in the same direction as the front of the remote controller 200. For example, i ) if a user moves the front of the remote controller 200 upwards, the pointer P may move upwards, and ii ) if the user moves the front of the remote controller 200 to the upper-left, the pointer P may move to the upper-left.

Accordingly, the remote controller 200 may operate as a pointing device which is used to move the pointer P on the display D.

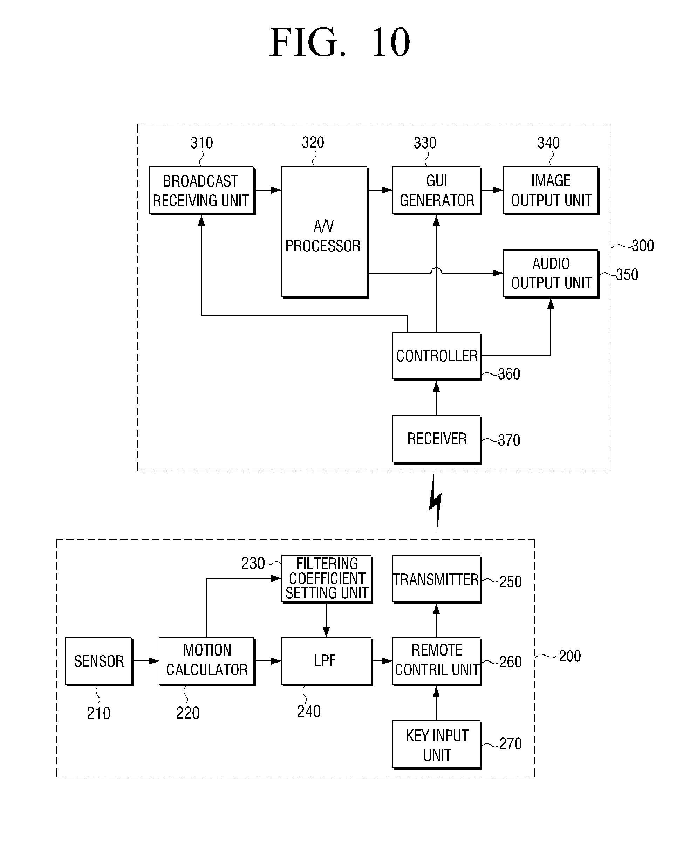

Hereinbelow, the DTV 300 and the remote controller 200 will be explained in more detail with reference to FIG. 10. FIG. 10 is a block diagram illustrating the DTV 300 and the remote controller 200.

Referring to FIG. 10, the remote controller 200 includes a sensor 210, a motion calculator 220, a filtering coefficient setting unit 230, and a low pass filter (LPF) 240, a transmitter 250, a remote control unit 260, and a key input unit 270.

The operations of the sensor 210, the motion calculator 220, the filtering coefficient setting unit 230, and the LPF 240 illustrated in FIG. 10 are identical to those of FIG. 3, and thus detailed explanation will be omitted.

The key input unit 270 may include various keys such as a power key, a channel key, a volume key, and a select key.

The remote control unit 260 transmits the motion data on which low pass filtering is performed by the LPF 240 to the DTV 300 through the transmitter 250. In addition, the remote control unit 260 transmits information on the key input by a user using the key input unit 270 to the DTV 300 through the transmitter 250.

Referring to FIG. 10, the DTV 300 includes a broadcast receiving unit 310, an A/V processor 320, a Graphic User Interface (GUI) generator 330, an image output unit 340, an audio output unit 350, a controller 360, and a receiver 370.

The broadcast receiving unit 310 receives a broadcast over wire or wirelessly from a broadcasting station or a satellite, and decodes the received broadcast.

The A/V processor 320 executes signal processing, such as video decoding, video scaling, and audio decoding, on the broadcast output from the broadcast receiving unit 310. And, the A/V processor 320 transmits an image signal to the GUI generator 330, and an audio signal to the audio output unit 350, respectively.

The GUI generator 330 generates a GUI to display on the display D, and combines the GUI with the image output from the A/V processor 320.

The image output unit 340 may display the image having the GUI output from the GUI generator 330 on the display D, or output to an external device connected through an external output terminal (not shown).

The audio output unit 350 outputs the audio output from the A/V processor 320 via a speaker, or outputs to an external device connected through an external output terminal. The controller 360 calculates the location of the pointer P based on the filtered motion data received from the remote controller 200 through the receiver 370, and controls the GUI generator 330 so that the pointer P moves to the calculated location.

As described above, according to an exemplary embodiment of the present invention, a filtering coefficient is set according to motion data, and low pass filtering is performed on the motion data. Accordingly, both time delay induced by fast movement and noise induced by vibration of a user's hand are resolved.

Specifically, a cutoff frequency of an LPF is adaptively changed according to a moving velocity. That is, the noise induced by vibration of a user's hand is minimized during slow movement, and time delay is minimized during fast movement.

The filtering apparatus according to an exemplary embodiment of the present invention is embodied in a simple structure and thus the performance and cost required to fabricate the apparatus is reduced.

As described above, according to an exemplary embodiment of the present invention, there is provided a display system including a remote control and a display device, wherein the remote control has a sensor which senses movement; a calculation unit which calculates motion data according to an output of the sensor; a setting unit which sets a filtering coefficient according to the motion data calculated by the calculation unit; a low pass filter (LPF) which performs low pass filtering on the motion data calculated by the calculation unit according to the filtering coefficient set by the setting unit; and a transmitter which transmits the filtered motion data; wherein the display device has a receiver which receives the filtered motion data transmitted by the remote control; a processor which processes the motion data received by the receiver; and a display which displays images according to the processed motion data.

According to another exemplary embodiment of the present invention, there is provided a display device having: a receiver which receives motion data which has been low pass filtered according to a filtering coefficient based on a sensed motion; a processor which processes the motion data received by the receiver; and a display which displays images according to the processed motion data.

According to the exemplary embodiment, the remote controller 200 processes motion data, but this should not be considered limiting. Alternatively, the motion data may be processed by the DTV 300.

The remote controller 200 senses movements through the sensor 110, and transmits the motion data sensed by the transmitter 250 to the DTV 300. Then, the DTV 300 receives the motion data through the receiver 370. The controller 360 of the DTV 300 performs the functions of the motion calculator 220, the filtering coefficient setting unit 230, and the LPF 240 of the remote controller 200. The controller 360 of the DTV 300 performs the same functions as those of the remote controller 200 in FIG. 10 and a pointing device in FIG. 3, and thus detailed explanation will be omitted.

As described above, the DTV 300 adjusts the degree of removing movements unintended by a user (that is, the sensitivity in sensing movements) according to the moving velocity calculated based on the motion data output from the remote controller 200. Specifically, the DTV 300 adjusts the degree of removing movement unintended by a user so that the faster the moving speed of the remote controller 200 becomes, the lower the degree of removing movements unintended by a user becomes (that is, the higher the sensitivity in sensing movements becomes).

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1.  An electronic apparatus, comprising:

    a sensor (110) which senses movement;
    a calculator (120) which calculates motion data based on an output from the sensor (110); and
    a motion processor (160) which adjusts a degree of removing movements unintended by a user according to a moving velocity calculated based on the motion data.

2.  The apparatus as claimed in claim 1, wherein the motion processor (160) adjusts the degree of removing movements unintended by a user so that the faster the moving velocity becomes, the lower the degree of removing movements unintended by a user becomes.

3.  The apparatus as claimed in claim 1 or 2, wherein the motion processor (160) comprises:

> a setting unit (130) which sets a filtering coefficient to adjust the degree of removing movements unintended by a user according to the moving velocity;
> a low pass filter (LPF) (140) which performs low pass filtering on the motion data calculated by the calculator (120) according to the filtering coefficient set by the setting unit (130); and
> a processor (150) which processes the motion data filtered by the LPF.

4. The apparatus as claimed in claim 3, wherein the setting unit (130) sets the filtering coefficient to be high if the moving velocity is high so that the faster the moving velocity becomes, the lower the degree of removing movements unintended by a user becomes.

5. The apparatus as claimed in claim 3 or 4, wherein the setting unit (130) calculates a moving velocity according to the motion data calculated by the calculator unit (120), and sets the filtering coefficient to adjust a cutoff frequency of the LPF according to the moving velocity.

6. The apparatus as claimed in claim 5, wherein if the moving velocity increases, the setting unit (130) sets the filtering coefficient to increase the cutoff frequency of the LPF (140).

7. The apparatus as claimed in claim 5 or 6, wherein if the moving velocity decreases, the setting unit (130) sets the filtering coefficient to decrease the cutoff frequency of the LPF (140).

8. The apparatus as claimed in claim 5, 6 or 7 wherein the motion data calculated by the calculator unit (120) comprises at least one of position data and velocity data which are changed according to the movement sensed by the sensor (110).

9. The apparatus as claimed in claim 8, wherein if the motion data calculated by the calculator unit (120) is the position data, the setting unit (130) calculates the moving velocity using the position data within a time interval including at least one of a current time and previous times.

10. The apparatus as claimed in claim 8, wherein if the motion data calculated by the calculator unit (120) is the velocity data, the setting unit (130) calculates the moving velocity using the velocity data within a time interval including at least one of a current time and previous times.

11. The apparatus as claimed in any one of claims 3 to 10, wherein the processor (150) further performs one of:

> 1) an operation to decide a location of a pointer to be displayed on a display according to the motion data filtered by the LPF (140),
> 2) an operation to transfer the motion data filtered by the LPF (140) to an external device, and
> 3) an operation to control other elements according to the motion data filtered by the LPF (140).

12. The apparatus as claimed in any one of claims 1 to 11, wherein the movement comprises at least one of 1) a movement of the electronic apparatus caused by a user, 2) a movement of the electronic apparatus caused by an external force, and 3) a movement of the electronic apparatus caused by an internal force.

13. A motion data processing method, comprising:

> sensing movement (S210);
> calculating motion data based on an output from a sensor (S220); and
> motion-processing to adjust a degree of removing movements unintended by a user according to a moving velocity calculated based on the motion data (S230-S290).

14. The motion data processing method as claimed in claim 13, wherein the motion-processing adjusts the degree of removing movements unintended by a user so that the faster the moving velocity becomes, the lower the degree of removing movements unintended by a user becomes (S240,S250).

15. A display system, comprising:

> a remote controller (200) which senses movements and outputs motion data of the sensed movements; and
> a display apparatus (300) which adjusts a degree of removing movements unintended by a user according to a moving velocity calculated based on the motion data output from the remote controller (200).

# FIG. 1A
## (RELATED ART)

$\alpha_0 = 0.1$

Legend: Original, Filtered

# FIG. 1B
## (RELATED ART)

$\alpha_0 = 0.1$

Legend: Original, Filtered

# FIG. 2A
## (RELATED ART)

$\alpha_0 = 0.7$

B

t(sec)

Original
Filtered

# FIG. 2B
## (RELATED ART)

$\alpha_0 = 0.7$

Original
Filtered

t(sec)

$f_1$     S     $f_2$

# FIG. 3

# FIG. 4

```
              ┌─────────────────────┐
              │        START        │
              └─────────────────────┘
                         │
S210          ┌─────────────────────┐
              │   SENSE MOVEMENT     │
              └─────────────────────┘
                         │
S220          ┌─────────────────────┐
              │ CALCULATE MOTION DATA│
              └─────────────────────┘
                         │
S230          ┌─────────────────────┐
              │ CALCULATE MOVING     │
              │ VELOCITY BASED ON    │
              │ MOTION DATA          │
              └─────────────────────┘
                         │
S240        ◇─────────────────────◇      N
           < MOVING VELOCITY        >────────────┐
            < INCREASE ?           >             │
             ◇───────────────────◇               │
                         │ Y                      │
                                          S260  ◇────────────────◇   N
S250       ┌─────────────────────┐             < MOVING VELOCITY  >───┐
           │ SET FILTERING        │              < DECREASE ?      >   │
           │ COEFFICIENT Fc       │               ◇──────────────◇    │
           │ TO INCREASE          │                      │ Y          │ S270
           └─────────────────────┘          ┌─────────────────────┐   │
                         │                   │ SET FILTERING        │   │
                         │                   │ COEFFICIENT Fc       │   │
                         │                   │ TO DECREASE          │   │
                         │                   └─────────────────────┘   │
                         │                            │                │
                         ├────────────────────────────┴────────────────┘
                         │
S280       ┌─────────────────────┐
           │ FILTER MOTION DATA   │
           │ DEPENDING ON SET     │
           │ FILTERING COEFFICIENT│
           └─────────────────────┘
                         │
S290       ┌─────────────────────┐
           │ PROCESS FILTERED     │
           │ MOTION DATA          │
           └─────────────────────┘
                         │
              ┌─────────────────────┐
              │         END          │
              └─────────────────────┘
```

# FIG. 5A

$\alpha_0 = 0.1, K=50, w=5$

# FIG. 5B

$\alpha_0 = 0.1, K=50, w=5$

# FIG. 6

$\alpha_0 = 0.1$, K=50, w=5

# FIG. 7

# FIG. 8

# FIG. 9

# FIG. 10

```
                  310              320              330              340
            ┌──────────────┐  ┌──────────┐   ┌──────────┐   ┌──────────┐
            │  BROADCAST   │→ │          │ → │   GUI    │ → │  IMAGE   │
            │RECEIVING UNIT│  │   A/V    │   │GENERATOR │   │OUTPUT UNIT│
            └──────────────┘  │PROCESSOR │   └──────────┘   └──────────┘
                    ↑         │          │                              ~300
                              │          │        ┌──────────┐          350
                              └──────────┘   ────→ │  AUDIO   │
                                               │   │OUTPUT UNIT│
                                               │   └──────────┘
                              ┌──────────┐          ↑
                              │CONTROLLER│──────────┘
                              └──────────┘  ~360
                                    ↑
                              ┌──────────┐
                              │ RECEIVER │ ~370
                              └──────────┘
```

```
            230 ┌──────────┐    ┌──────────┐
                │FILTERING │    │TRANSMITTER│ ~250
                │COEFFICIENT│   └──────────┘
                │SETTING UNIT│
                └──────────┘         ↑
                     ↓
  ┌──────┐  ┌──────────┐  ┌────┐  ┌──────────┐
  │SENSOR│→ │  MOTION  │→ │LPF │→ │ REMOTE   │ ~260    ~200
  └──────┘  │CALCULATOR│  └────┘  │CONTRIL UNIT│
  210        └──────────┘  240    └──────────┘
             220                        ↑
                               ┌──────────┐
                               │KEY INPUT │ ~270
                               │   UNIT   │
                               └──────────┘
```